# EUROPEAN PATENT APPLICATION

(11) **EP 3 007 337 A1**
(43) Date of publication of application: **13.04.2016**
(21) Application number: 14188066.6
(22) Date of filing: 08.10.2014
(51) Int. Cl.: H02K 17/16

(54) **Rotor in an electric machine**

(71) Applicant: ABB Technology AG, 8050 Zürich (CH)
(72) Inventor: Eloranta, Timo, 00380 Helsinki (FI); Liukkonen, Olli, 00380 Helsinki (FI); Lyly, Mikko, 00380 Helsinki (FI)
(74) Representative: Kolster Oy Ab

(57) **Abstract**

The rotor comprises a shaft (10) having end portions (11, 12) and a middle portion (13) as well as a centre axis (X-X). A plurality of axially (X-X) extending slots (16) are made into a circumference of the middle portion (13). A rod (20) is positioned in each slot (16) and a short circuit ring (31, 32) is situated at each end of the middle portion (13). Each end surface of the middle portion (13) comprises a circular groove (17, 18) extending in the axial direction (X-X) from the end surface into the middle portion (13) and receiving a respective short circuit ring (31, 32). Each end portion of the axially (X-X) extending slots (16) opens into the corresponding circular groove (17, 18), whereby each end of each rod (20) is attached to the corresponding short circuit ring (31, 32).

## Description

### FIELD OF THE INVENTION

The present invention relates to a rotor in an electric machine according to the preamble of claim 1.

### BACKGROUND ART

Pumping of natural gas from gas fields below sea water has increased the need for electric motors having a power in the megawatt range and a rotation speed in the range of 4000 - 15000 rpm. A high rotation speed makes it possible to connect the working machine, which in this case is a radial compressor with several stages directly to the shaft of the electric motor. There is thus no need for a separate gear and the electric motor and the compressor can be mounted within a common cylindrical pressure framework. The common pressure framework makes it possible to have a high degree of protection and water tightness also for the electric motor.

The electric motor in such applications is normally a squirrel cage motor and the rotor of the electric motor is supported with active magnetic bearings to the framework of the electric motor. A massive steel rotor or a laminated rotor can be used in the electric motor.

Rotors of electric motors have traditionally been manufactured so that the frame of the rotor is made of a laminated package of electric sheets. Copper or aluminium rods are inserted into grooves made in the electric sheets. There are short circuit rings at both ends of the rods for connecting the ends of the rods. The short circuit rings are attached to the rods with hard soldering or welding. The whole squirrel cage of the motor can also be manufactured as one casting piece comprising both the rods and the short circuit rings. The short circuit rings are normally supported at the rotor only through the rods. Casted short circuit rings can also sometimes be supported in the radial direction at the sheet package with shape adapted connections. An electric motor with a great diameter or a high rotation speed can be provided with specific support bands in order to secure the fastening of the short circuit ring against radial forces.

Another possibility is to use a massive rotor manufactured from ferromagnetic steel. Grooves extending in the axial direction are made on the outer surface of the massive rotor. Copper rods are inserted into the grooves by means of hot-isostatic pressing making a strong bond between the copper rods and the steel rotor. The short circuit rings at the ends of the rods have in prior art solutions a traditional design i.e. they are supported at the rotor only through the rods. There is also no separate radial support for the short circuit rings.

WO publication 2010/100214 discloses a rotor for an electric motor. The rotor comprises a metal shaft which also forms a metal core of the rotor. A multiplicity of axially extending grooves has been made into a central section of the metal core. Electrical conductors in the form of straight copper bars, which are electrically connected to each other at their axial ends by short circuit rings, are laid in the grooves. Termination rings hold the short circuit rings and the axially extending conductors in their axial position on the shaft. A hot pressing containment in the form of a metallic cylinder, which respectively has an end cap on its two axial ends, is laid around the central section of the metal core, the electrical conductors and the short circuit rings and termination rings. The end cap is welded to the shaft and to the cylindrical part of the hot pressing containment. The hot pressing containment seals the metal core gas tightly from the surroundings in the region of the conductors. The rotor is then put in an autoclave and hot-isostatically pressed at a high pressure and at a temperature above 1000 degrees Celsius. The separate metallic cylinder forms the radial support for the short circuit rings.

The radial support arrangements for the short circuit rings are in prior art rotors complex and consist of several components. There exists thus a need for a simple and reliable solution for supporting the short circuit rings. The short circuit rings in an electric machine with a great diameter and/or a high rotation speed must be sufficiently supported against forces in the radial direction.

### BRIEF DESCRIPTION OF THE INVENTION

An object of the present invention is to provide a simple and reliable novel solution for supporting the short circuit rings in a rotor of an electric machine. The rotor in the electric machine according to the invention is characterized by what is stated in the independent claim 1.

The rotor comprises:
a shaft having end portions and a middle portion as well as a centre axis, at least the middle portion being made of a massive ferromagnetic material,
a plurality of axially extending slots made into a circumference of the middle portion,
a rod of an electrically conductive material being positioned in each slot,
a short circuit ring of an electrically conductive material being situated at each end of the middle portion for short circuiting the rods.

The rotor is characterized in that:
each end surface of the middle portion comprises a circular groove extending in the axial direction from the end surface into the middle portion, and receiving a respective short circuit ring,
each end portion of the axially extending slot opening into the corresponding circular groove, whereby each end of each rod is attached to the corresponding short circuit ring.

The short circuit rings are in this solution tightly positioned in the circular grooves. The circular groove forms a nest for the short circuit ring. The outer circular wall and the inner circular wall of the circular groove support the short circuit ring against forces acting in the radial direction. These support walls are a part of the middle portion of the shaft. There is thus no need to arrange separate collars in order to support the short circuit rings against radial forces. This means that the weight of the rotor is reduced and the number of components is reduced.

The short circuit rings could be made of two parts or advantageously of one part. A short circuit ring made of one part has to be threaded on place over the end portions of the shaft, which means that the diameter of the end portions must be smaller than the diameter of the middle portion.

### BRIEF DESCRIPTION OF THE DRAWINGS

In the following the invention will be described in greater detail by means of preferred embodiments with reference to the attached drawings, in which
Figure 1 shows an axonometric view of a rotor according to the invention.
Figure 2 shows a first axial cross section of one end of the rotor.
Figure 3 shows a second axial cross section of the rotor.

### DETAILED DESCRIPTION OF THE INVENTION

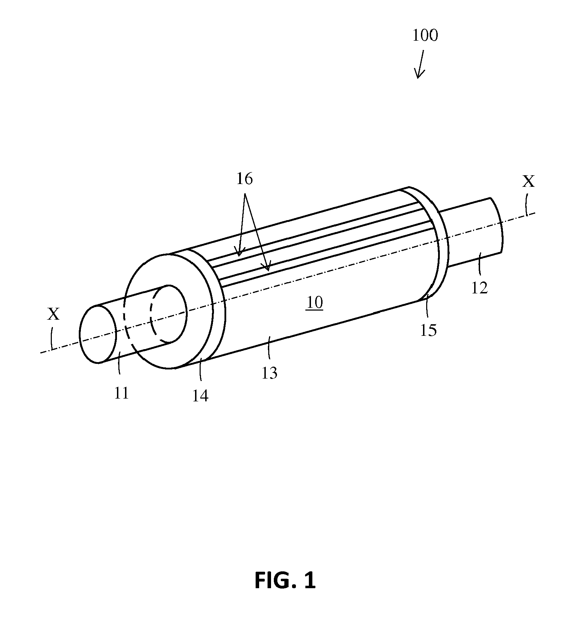

Figure 1 shows an axonometric view of a rotor according to the invention. The rotor 100 comprises a shaft 10 having end portions 11, 12 and a middle portion 13 as well as a centre axis X-X. At least the middle portion 13 and preferably the whole shaft 10 is made of a massive ferromagnetic material. The circumference of the middle portion 13 comprises axially X-X directed slots 16. The figure shows only two slots 16 but there are a plurality of slots 16 positioned on the whole circumference of the middle portion 13 at a certain angular distance from each other. The axially directed slots 16 do not extend along the whole axial X-X length of the middle portion 13. Both ends 14, 15 of the middle portion 13 form cylindrical support parts with no slots 16 on the outer surface.

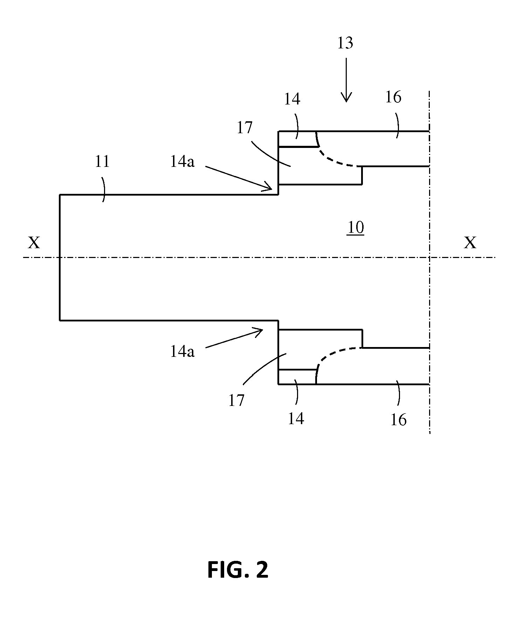

Figure 2 shows a first axial cross section of one end of the rotor. Each end surface of the middle portion 13 comprises a circular groove 17 extending in the axial direction X-X from the end surface into the middle portion 13 of the shaft 10. There will remain a cylindrical support part 14 at each end of the middle portion 13 forming a radial outer support for the circular groove 17. There will also remain a cylindrical inner support 14a at each end of the middle portion 13 forming a radial inner support for the circular groove 17. The end portions of the axial slots 16 on the circumference of the middle portion 13 open into the circular groove 17.

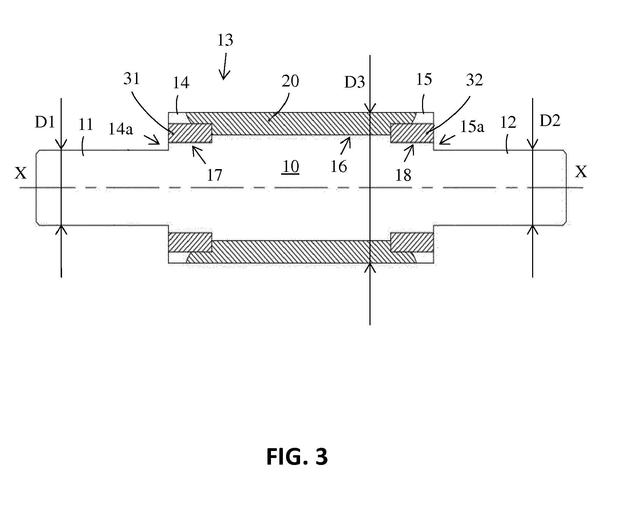

Figure 3 shows a second axial cross section of the rotor. The diameter D3 of the middle portion 13 is greater than the diameters D1, D2 of the end portions 11, 12 of the shaft 10. A rod 20 of an electrically conductive material is positioned in each of the slot 16 in the circumference of the middle portion 13. A short circuit ring 31, 32 of an electrically conductive material is positioned in each of the circular grooves 17, 18 situated at each end of the middle portion 13. Each end of each rod 20 is attached to a respective short circuit ring 31, 32, which means that each end of the rod 20 is short circuited by the respective short circuit ring 31, 32.

Each short circuit ring 31, 32 is situated tightly in the respective circular groove 17, 18. The outer cylindrical support parts 14, 15 and the inner cylindrical support parts 14a, 15a in the middle portion 13 of the shaft 10 support the short circuit ring 31, 32 against forces in the radial direction. The cylindrical outer support parts 14, 15 and the inner support parts 14a, 15a at each end of the middle portion 13 are a part of the middle portion 13. There is thus no need to arrange separate collars for supporting the short circuit rings 31, 32 against radial forces in this solution. There is also no need to have separate termination rings in order to hold the short circuit rings 31, 32 in place in the axial direction. The short circuit rings 31, 32 are attached to the rods 20 and this will keep the short circuit rings 31, 32 in place in the axial direction. The axial forces acting on the short circuit rings 31, 32 are rather modest in this solution.

The diameter D1, D2 of the end portions 11, 12 of the shaft 10 are in the embodiment shown in the figures smaller than the diameter D3 of the middle portion 13. This arrangement makes it possible to use a short circuit ring 31, 32 made of one piece which can be threaded on place over the end portions 11, 12 of the shaft 13. It is, however, also possible to use a short circuit ring 31, 32 made of two pieces in which case there could be expansions on the end portions 11, 12 of the shaft 10.

The diameters D1, D2 of the end portions 11, 12 are normally the same, but they could be different if needed.

The shaft 10 is supported from the end portions 11, 12 by active magnetic bearings to the frame structures of the rotor. The active magnetic bearing arrangements are not shown in the figures and they are as such known to a person skilled in the art.

The rods 20 and the short circuit rings 31, 32 are advantageously made of copper. The shaft 10 is advantageously made of ferromagnetic steel.

The slots 16 could be formed as grooves being partly or completely open at the outer surface of the middle portion 13 or as holes. There would be a solid ring on the outer circumference of the middle portion 13 when the slots 16 are formed of holes. It is as such cheaper to produce open grooves 16 into the outer surface of the middle portion 13. The rods 20 could then be attached e.g. by the use of hot isostatic pressing to the rotor core. An intermediate layer of e.g. nickel could be used between the copper rods 20 and the steel core when attaching the rods 20 with hot isostatic pressing. Also the short circuit rings 31, 32 could be attached by hot isostatic pressing to the rotor core and to the rods 20.

It will be obvious to a person skilled in the art that, as the technology advances, the inventive concept can be implemented in various ways. The invention and its embodiments are not limited to the examples described above but may vary within the scope of the claims.

## Claims

1. Rotor in an electric machine, said rotor (100) comprising:
a shaft (10) having end portions (11, 12) and a middle portion (13) as well as a centre axis (X-X), at least the middle portion (13) being made of a massive ferromagnetic material,
a plurality of axially (X-X) extending slots (16) made into a circumference of the middle portion (13),
a rod (20) of an electrically conductive material being positioned in each slot (16),
a short circuit ring (31, 32) of an electrically conductive material being situated at each end of the middle portion (13) for short circuiting the rods (20),
**characterized in that**
each end surface (11, 12) of the middle portion (13) comprises a circular groove (17, 18) extending in the axial direction (X-X) from the end surface (11, 12) into the middle portion (13) and receiving a respective short circuit ring (31, 32),
each end portion of the axially (X-X) extending slots (16) opening into the corresponding circular groove (17, 18), whereby each end of each rod (20) is attached to the corresponding short circuit ring (31, 32).

2. Rotor according to claim 1, **characterized in that** the diameter (D3) of the middle portion (13) is greater than the diameters (D1, D2) of the end portions (11, 12).

3. Rotor according to claim 2, **characterized in that** each short circuit ring (31, 32) is made of one piece.
